# EUROPÄISCHE PATENTSCHRIFT

(11) **EP 1 516 831 B1**
(45) Veröffentlichungstag und Bekanntmachung des Hinweises auf die Patenterteilung: **30.08.2006**
(21) Anmeldenummer: 04015834.7
(22) Anmeldetag: 06.07.2004
(51) Int. Cl.: B65D 88/66, B65G 65/46

(54) **Anlage zum Einsammeln von fliessfähigen Materialkomponenten**
Device for dosing bulk material components
Dispositif pour doser des matériaux en vrac

(30) Priorität: 16.09.2003 DE 10342714
(43) Veröffentlichungstag der Anmeldung: 23.03.2005
(73) Patentinhaber: AZO Verwaltungs-GmbH, 74706 Osterburken (DE)
(72) Erfinder: Pahl, Frank, 74746 Höpfingen (DE); Altrichter, Franz, 74238 Krautheim (DE)
(74) Vertreter: Dipl.-Ing. Heiner Lichti Dipl.-Phys. Dr.rer.nat. Jost Lempert Dipl.-Ing. Hartmut Lasch

(56) Entgegenhaltungen:
- EP-A- 0 287 708
- DE-C- 4 434 708
- US-A- 5 779 427

## Beschreibung

Die Erfindung betrifft eine Anlage zum Einsammeln von fließfähigen Materialkomponenten, die in mehreren in Reihe angeordneten Komponentenbehältern enthalten sind, mit je einer Dosiereinrichtung im Bereich des Auslaufs jedes Komponentenbehälters und einem entlang der aufgereihten Komponentenbehälter verfahrbaren Sammelbehälter, in welchen die jeweilige Materialkomponente entsprechend ihrem Anteil an einer Mischungsrezeptur übergeben wird.

Bei Anlagen dieser Art kann eine Vielzahl von Komponentenbehältern in Reihe angeordnet sein und je nach Mischungsrezeptur Komponenten nur aus einzelnen oder aus allen Behältern entnommen werden, wobei nur ein fahrbarer Sammelbehälter erforderlich ist, der die Komponentenbehälter in einer programmierten Abfolge entsprechend der für die jeweilige Mischungsrezeptur zu entnehmenden Komponenten anfährt. Die Komponente wird dann mittels der Dosiereinrichtung aus dem Komponentenbehälter entnommen und an den Sammelbehälter übergeben.

Als Dosiereinrichtung dienen meist Dosierschnecken, die in Abhängigkeit von ihrer Drehzahl ein bestimmtes Volumen der Komponenten entnehmen und an den Sammelbehälter abgeben. Bei stark unterschiedlichen Mengen kann die Drehzahl der Dosierschnecke auch variabel sein, um den Entnahmevorgang zu beschleunigen. In den meisten Fällen ist jedoch eine gravimetrische Dosierung der Komponenten erforderlich. Dies setzt eine der Dosierschnecke nachgeschaltete Wiegeeinrichtung vor. So ist es beispielsweise bekannt (EP 0 344 521 B1) jedem Komponentenbehälter eine Dosierschnecke und eine Wiegeeinrichtung zuzuordnen und die verschiedenen Wiegebehälter entsprechend dem Programm der Rezeptur mit einem Sammelbehälter anzufahren. Diese Anlage ist sehr aufwändig, hat aber aufgrund der Kipplagerung der Wiegebehälter den Vorteil, dass die Entleerung schnell und ohne weitere Hilfsmittel, wie Lockungseinrichtungen oder dergleichen, erfolgen kann und dass ferner ein rückstandsfreies Entleeren des Wiegebehälters möglich ist, wodurch eine hohe Rezepturgenauigkeit gewährleistet ist.

Weit weniger aufwändig ist die nach einem älteren, nicht vorveröffentlichten Vorschlag der Anmelderin konzipierte Anlage (EP 1 361 185 A2), bei der der Sammelbehälter entlang der Komponentenbehälter verfahrbar ist und jeder Komponentenbehälter an seinem Boden eine antriebslose Dosierschnecke aufweist, die von einem auf dem Fahrrahmen mitfahrenden Kupplungsmittel in Drehung versetzbar ist. Diese Anlage hat den großen Vorteil, dass nur noch ein einziger Antrieb für die Dosierschnecken sämtlicher Komponentenbehälter erforderlich ist, die die einzelnen Komponenten auf einen als Wiegebehälter ausgebildeten Sammelbehälter, der gleichfalls mit dem Fahrrahmen mitfährt, abgeben. Wegen weiterer Einzelheiten wird auf die ältere Patentanmeldung verwiesen. Die Erfindung bezieht sich vorzugsweise auf Anlagen dieser Art, ist aber gleichermaßen vorteilhaft auch auf Anlagen anwendbar, bei denen jedem Komponentenbehälter eine angetriebene Dosierschnecke zugeordnet ist.

Bei einer anderen bekannten Anlage zur Herstellung von Farbstoffmischungen (EP 0 287 708 A2) fördert die antrieblos in jedem Komponentenbehälter angeordnete Dosierschnecke nach Andocken eines auf einem Fahrwagen angeordneten Antrieb die gewünschte Farbstoffmenge auf eine Waage, die auf der gegenüberliegenden Seite des Komponentenbehälters gleichfalls auf dem Fahrwagen angeordnet ist.

Da sich unter den zu bearbeitenden Komponenten auch solche befinden können, die schlechte Fließeigenschaften haben und zur Brückenbildung neigen, kommt es in einem solchen Fall zwangsläufig zu Fehldosierungen. Dem könnte man dadurch begegnen, dass für jeden Komponentenbehälter, zumindest aber für diejenigen, die solche schlecht fließfähigen Komponenten enthalten, eine eigene Lockerungseinrichtung zugeordnet wird, die bei Anfahren des Sammelbehälters/Wiegebehälters in Tätigkeit gesetzt wird, um einen störungsfreien kontinuierlichen Austrag zu gewährleisten. Eine solche Maßnahme wäre technisch aufwändig und zudem funktionsanfällig. Lockerungseinrichtungen für Einzelbehälter sind bekannt (DE 44 34 708 C1). Ferner ist für das Entladen von Silowaggons eine stationäre Lockerungseinrichtung an der Entleerstation bekannt (US 5 779 427 A), die nach Positionieren des Waggons in Wirklage mit der Trichterwand des Silos gebracht wird. Hierbei geht es aber ausschließlich um das vollständige Entleeren des Silos.

Der Erfindung liegt die Aufgabe zugrunde, eine Anlage zum Einsammeln von fließfähigen Materialkomponenten, die in mehreren in Reihe angeordneten Komponentenbehältern enthalten und an einem fahrbaren Sammelbehälter zu übergeben sind, so auszubilden, dass auch schlecht fließfähige und zur Brückenbildung neigende Materialkomponenten einwandfrei und kontinuierlich bei geringstem konstruktiven Bauaufwand ausgetragen und übergeben werden.

Diese Aufgabe wird erfindungsgemäß dadurch gelöst, dass mit dem Sammelbehälter ein Vibrator verfahrbar ist, der bei Anfahren eines ausgewählten Komponentenbehälters mittels eines Stellantriebs an die Wandung dieses Behälters zur Lockerung der in ihm enthaltenen Materialkomponente ansetzbar ist, und dass der Stellantrieb gegenüber dem Vibrator schwingungstechnisch entkoppelt ist.

Mit der Erfindung ist der große Vorteil verbunden, dass lediglich eine einzige Lockerungseinrichtung benötigt wird, um entweder an sämtlichen Komponentenbehältern oder nur an denjenigen, die eine schlecht fließfähige Komponente enthalten, zum Einsatz gebracht zu werden. Durch die schwingungstechnische Entkopplung des Vibrators von dem Stellantrieb ist vermieden, dass die Vibrationen auf das Stellglied und damit auf den Fahrrahmen und die mit ihm mitgeführten Bauteile und den Sammel- oder Wiegebehälter übertragen werden. Da für die gesamte Anlage nur eine einzige Lockerungseinrichtung notwendig ist, reduziert sich auch die Störanfälligkeit und wird der Energieverbrauch minimiert, da die Lockerungseinrichtung immer nur dann in Betrieb genommen wird, wenn tatsächlich Material aus dem entsprechenden Behälter ausgetragen wird.

In bevorzugter Ausführung ist der Vibrator an die Wandung des Komponentenbehälters selbsthaftend ansetzbar, so dass in der Betriebslage nur eine Verbindung zwischen ihm und dem Behälter besteht und eine schwingungstechnische Entkopplung gegenüber dem Stellglied in einfacher und vielfältiger Weise möglich ist.

Mit Vorteil weist der Vibrator einen pneumatisch gesteuerten Saugnapf zum Ansetzen an die Wandung des Komponentenbehälters auf. Nach dem Ansetzen und Evakuieren des Saugnapfs bildet der Vibrator eine autonome Baueinheit, die mit dem Behälter verbunden und gegenüber dem Stellglied schwingungstechnisch isoliert ist. Zum Abnehmen des Vibrators wird der Saugnapf belüftet und von dem Stellglied wieder in seine Ruhelage verbracht. Nach Erreichen derselben wird der Vibrator zusammen mit dem Fahrrahmen und dem Sammelbehälter an den nächsten Komponentenbehälter verfahren, bis schließlich die fertige Mischungsrezeptur aufgenommen ist. Abschließend wird der Sammelbehälter in eine Übergabestation verfahren, in der die fertige Mischungsrezeptur aus dem Sammelbehälter/Wiegebehälter beispielsweise in einen Mischer übergeben wird.

Der Vibrator ist vorzugsweise als Kolbenvibrator ausgebildet, der mit einem Klopfer auf die Behälterwandung einwirkt. Stattdessen kann auch ein Umwuchtmotor vorgesehen sein.

In vorteilhafter Weise ist der Stellantrieb ein Pneumatikzylinder, der den Kolbenvibrator in Betriebsstellung bringt.

Zu diesem Zweck ist der Stellantrieb fest und der Kolbenvibrator mit Abstand hiervon angeordnet, wobei zwischen ihnen eine mit dem Stellantrieb verbundene, dämpfende Führung angeordnet ist, in welcher ein mit dem Kolbenvibrator verbundenes Führungsglied mit Spiel geführt ist.

Es besteht also keine unmittelbare metallische Verbindung zwischen dem Vibrator und dem Stellantrieb, so dass der Vibrator nach dem Anhaften an die Behälterwandung die Schwingungsbewegung ungehindert übertragen kann, ohne dass Schwingungen auf den Stellantrieb übergreifen.

In bevorzugter Ausführung sitzt der Sammelbehälter in einem Fahrrahmen und ist das Stellglied mit dem Fahrrahmen über ein schwingungsdämpfendes Bauteil verbunden. Damit ist gewährleistet, dass keine Schwingungen auf dem Fahrrahmen und den von ihm aufgenommenen Sammelbehälter oder Wiegebehälter übertragen werden.

In der Regel weisen Komponentenbehälter bei den mit der Erfindung angesprochenen Anlagen ein trichterförmig nach innen eingezogenes Unterteil auf, an den der Boden mit der Dosierschnecke anschließt. Bei solchen Komponentenbehältern ist der Kolbenvibrator an das Unterteil ansetzbar, mit seiner Achse also unter einem entsprechenden Winkel geneigt. Dadurch kann die Schwerkraft bei der Rückbewegung des Kolbenvibrators in dessen Ruhelage zusätzlich genutzt werden.

In weiterhin bevorzugter Ausführung ist, wie bereits angedeutet, der Sammelbehälter als Wiegebehälter ausgebildet, so dass die Komponenten entsprechend ihrem Gewichtsanteil aus den einzelnen Komponentenbehältern entnommen werden können.

Weitere Einzelheiten und Vorteile der Erfindung ergeben sich aus der nachfolgenden Beschreibung einer in der Zeichnung wiedergegebenen, bevorzugten Ausführungsform. In der Zeichnung zeigen:
- Fig.1: eine schematische Teilansicht einer Anlage mit einem Komponentenbehälter und einem verfahrbaren Wiegebehälter;
- Fig.2: eine schematische Ansicht - teilweise im Schnitt - einer mitfahrenden Lockerungseinrichtung in Verfahrposition;
- Fig.3: eine der Fig.2 entsprechende Ansicht der Lockerungseinrichtung in Andockposition;
- Fig.4: eine der Fig.2 entsprechende Lockerungseinrichtung in Arbeitsposition und
- Fig.5: eine Ansicht "X" gemäß Fig.4 ohne den Pneumatikzylinder.

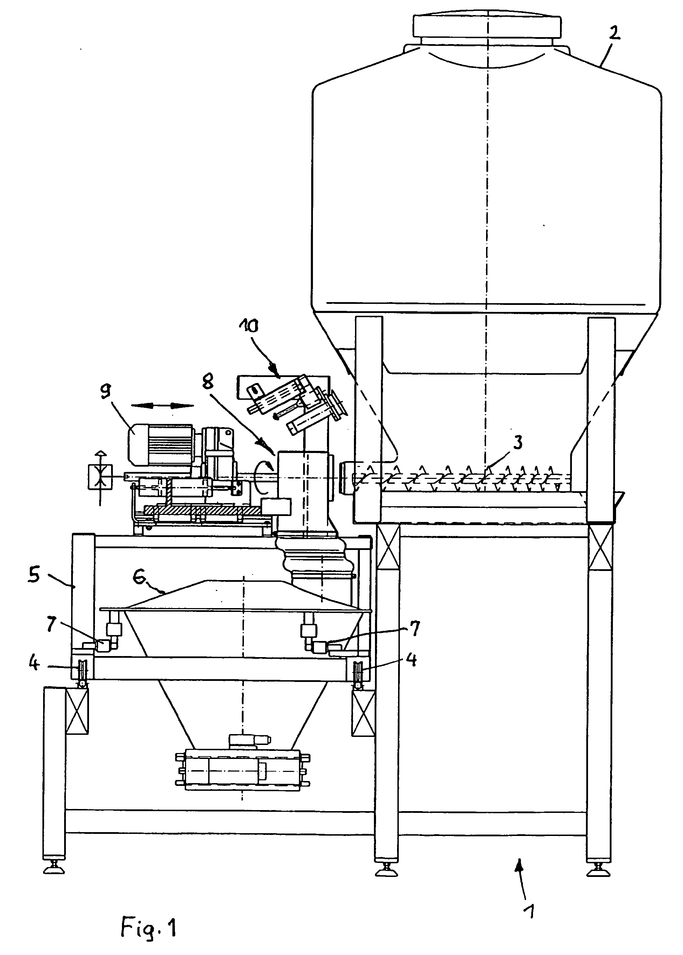

In Fig.1 ist ein Standrahmen 1 erkennbar, auf dessen in der Zeichnung rechts wiedergegebenen Teil Komponentenbehälter 2 austauschbar aufgesetzt sind. Mehrere solcher Komponentenbehälter 2 sind in einer senkrecht zur Zeichenebene verlaufenden Reihe hintereinander angeordnet. Jeder Komponentenbehälter 2 enthält eine fließfähige, z.B. pulverförmige bis granulatförmige Materialkomponente.

In jedem Komponentenbehälter 2 ist unmittelbar oberhalb des Bodens eine antriebslose Dosierschnecke 3 angeordnet, die - wie später beschrieben - zum Austragen der Materialkomponente dient.

Auf dem in Fig.1 linken Teil des Standrahmens 1 ist ein Fahrrahmen 5 mittels Rollen 4 entlang der aufgereihten Komponentenbehälter 2 verfahrbar. In dem Fahrrahmen 5 sitzt ein Wiegebehälter 6, der über Kraftmessdosen 7 auf dem Fahrrahmen abgestützt ist. Auf dem Fahrrahmen sitzt ferner eine Kupplungs- und Andockeinrichtung 8 mit einem Antriebsmotor 9, die an das austragseitige Ende der Dosierschnecke 3 herangefahren werden kann, um die Dosierschnecke 3 in Drehung zu versetzen und die im Komponentenbehälter 2 enthaltene Materialkomponente entsprechend ihrem Anteil an einer Mischungsrezeptur in den Wiegebehälter 6 zu übergeben. Wegen weiterer Einzelheiten dieser Dosier- und Übergabeeinrichtung wird auf die nicht vorveröffentlichte deutsche Patentanmeldung 103 20 763.5 verwiesen.

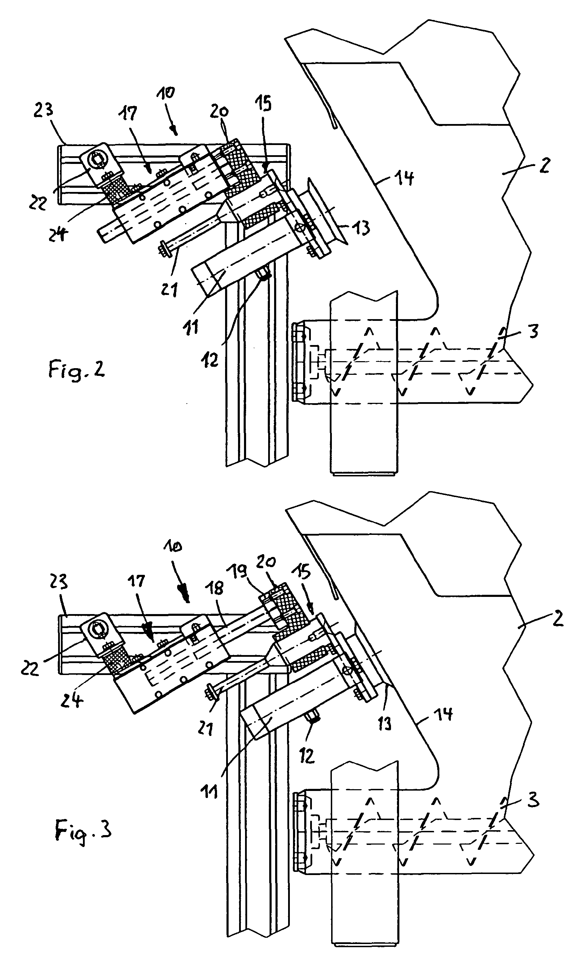

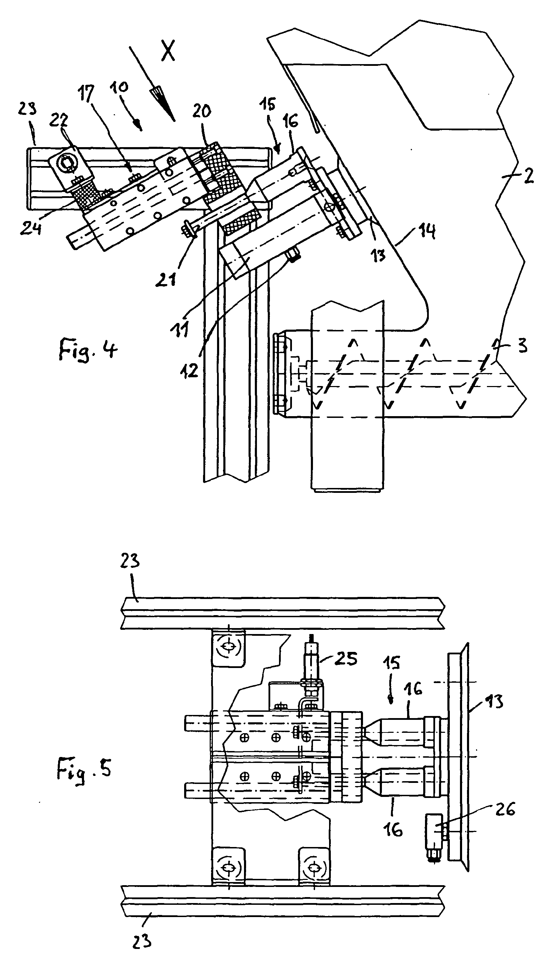

Auf dem Fahrrahmen 5 sitzt schließlich eine Austragshilfe 10 in Form einer Lockerungseinrichtung, die in Fig.1 in der Verfahrposition wiedergegeben und in Fig.2 in vergrößertem Maßstab gezeigt ist. Als eigentliche Lockerungseinrichtung dient ein Kolbenvibrator 11, der über einen Druckluftanschluss 12 betrieben wird und mittels eines Saugnapfes 13 an die Wandung 14 der trichterförmig nach innen eingezogenen Unterteils des Behälters 2 angehaftet werden kann. Der Kolbenvibrator 11 ist mit einem Führungsglied 15 fest verbunden, das aus zwei parallelen Führungsstangen 16 besteht (siehe Fig.5). Ferner weist die Lockerungseinrichtung einen Stellantrieb (17) für den Kolbenvibrator 11 auf, der beim gezeigten Ausführungsbeispiel als Pneumatikzylinder ausgebildet ist. Der Kolben 18 des Pneumatikzylinders 17 ist an seinem Kopf 19 mit einem dämpfenden Kunststoffteil 20 versehen (siehe Fig.3), das in parallelen Durchgangslöcher die beiden Führungsstangen 16 des Führungsgliedes 15 aufnimmt. Die Führungsstangen 16 des Führungsgliedes 15 weisen an ihrem dem Saugnapf 13 abgekehrten Ende 21 einen über einen konischen Übergang stark reduzierten Durchmesser auf.

Das Kunststoffteil 20 besitzt dämpfende Eigenschaften. Ebenso ist der Pneumatikzylinder 17 über ein dämpfendes Kunststoffteil 24 mittels eines Winkelprofils 22 an einem Rahmenteil 23 des Fahrrahmens 5 dämpfend befestigt.

Der Saugnapf 13 wird über einen eigenen Pneumatikanschluss 26 (siehe Fig.5) mittels eines Injektors evakuiert. In der Fahrposition (Fig.2) wird die Stellung des Kolbenvibrators 11 und damit die des Saugnapfs 13 mittels eines Sensors 25 (Fig.5) abgetastet, um sicherzustellen, dass der Saugnapf in der Fahrstellung vom Behälter 2 freigestellt ist.

Die Funktionsweise der Lockerungseinrichtung ist nachfolgend beschrieben:

Hat der Fahrrahmen 5 mit dem Wiegebehälter 6 einen vorgewählten Komponentenbehälter 2 angefahren, wird zunächst die Andock- und Kupplungseinrichtung 8 mit der Dosierschnecke 3 verbunden und zugleich der Auslauf freigelegt. Gleichzeitig oder danach wird die Lockerungseinrichtung aus der in Fig.1 und 2 gezeigten Fahrstellung in die in Fig.3 gezeigte Andockstellung gebracht, indem die Kolbenstange 18 des Pneumatikzylinders 17 ausfährt und über das Kunststoffteil 20 das Führungsglied 15 sowie den mit ihm fest verbundenen Kolbenvibrator 11 mit dem Saugnapf 13 mitnimmt. In dieser Andockposition des Saugnapfs 13 wird der Saugnapf evakuiert, so dass der Kolbenvibrator 11 selbsthaftend an der Wandung 14 des Behälters 2 angesetzt ist. In dieser Position (Fig.3) wird die Kolbenstange 18 des Pneumatikzylinders 17 zurückgefahren, so dass das Kunststoffteil 20 von dem Führungsglied 15 frei wird, indem das dünnere Ende 21 in dem Loch 26 des Kunststoffteils 20 ein ausreichendes Spiel besitzt. In dieser Position wird der Kolbenvibrator 11 ausschließlich über den selbsthaftenden Saugnapf 13 an der Wandung 14 gehalten und mittels der über den Anschluss 12 eingespeisten Druckluft in Betrieb gesetzt. Die Schwingungen übertragen sich auf die Wandung 14 des Behälters und damit auf die in ihm enthaltene Materialkomponente, so dass das Material kontinuierlich der Dosierschnecke 3 zufließt.

Die Austragshilfe oder Lockerungseinrichtung 10 kann wahlweise an jedem Komponentenbehälter, der zur Herstellung der gewünschten Mischungsrezeptur angefahren wird, oder auch nur an solchen Komponentenbehältern, die ein schwer fließendes Material enthalten, angesetzt werden.

## Patentansprüche

1. Anlage zum Einsammeln von fließfähigen Materialkomponenten, die in mehreren in Reihe angeordneten Komponentenbehältern (2) enthalten sind, mit je einer Dosiereinrichtung (3) im Bereich des Auslaufs jedes Komponentenbehälters (2) und einem entlang der aufgereihten Komponentenbehälter verfahrbaren Sammelbehälter (6), in welchen die jeweilige Komponente entsprechend ihrem Anteil an einer Mischungsrezeptur übergeben wird, **dadurch gekennzeichnet, dass** mit dem Sammelbehälter (6) ein Vibrator (11) verfahrbar ist, der bei Anfahren eines ausgewählten Komponentenbehälters (2) mittels eines Stellantriebs (17) an die Wandung (14) dieses Behälters zur Lockerung der in ihm enthaltenen Materialkomponente ansetzbar ist, und dass der Stellantrieb (17) gegenüber dem Vibrator (11) schwingungstechnisch entkoppelt ist.

2. Anlage nach Anspruch 1, **dadurch gekennzeichnet, dass** der Vibrator (11) an die Wandung (14) des Komponentenbehälters (2) selbsthaftend ansetzbar ist.

3. Anlage nach Anspruch 1 oder 2, **dadurch gekennzeichnet, dass** der Vibrator (11) einen pneumatisch gesteuerten Saugnapf (13) zum Ansetzen an die Wandung (14) des Komponentenbehälters (2) aufweist.

4. Anlage nach einem der Ansprüche 1 bis 3, **dadurch gekennzeichnet, dass** der Vibrator (11) ein Kolbenvibrator ist.

5. Anlage nach einem der Ansprüche 1 bis 4, **dadurch gekennzeichnet, dass** der Stellantrieb (17) ein Pneumatikzylinder ist.

6. Anlage nach Anspruch 4, **dadurch gekennzeichnet, dass** der Stellantrieb (17) fest und der Kolbenvibrator (11) mit paralleler Achse mit Abstand davon angeordnet ist, und dass zwischen ihnen eine mit dem Stellantrieb verbundene, dämpfende Führung (15, 20) angeordnet ist, in welcher ein mit dem Kolbenvibrator (11) verbundenes Führungsglied (15) mit Spiel geführt ist.

7. Anlage nach einem der Ansprüche 1 bis 6, **dadurch gekennzeichnet, dass** der Sammelbehälter (6) in einem Fahrrahmen (5) sitzt und dass der Stellantrieb (17) mit dem Fahrrahmen (5, 23) verbunden ist.

8. Anlage nach Anspruch 7, **dadurch gekennzeichnet, dass** zwischen dem Stellantrieb (17) und dem Fahrrahmen (5) ein schwingungsdämpfendes Bauteil (20) angeordnet ist.

9. Anlage nach einem der Ansprüche 1 bis 8, **dadurch gekennzeichnet, dass** bei Komponentenbehältern (2) mit trichterförmig nach innen eingezogenem Unterteil der Kolbenvibrator (11) an das Unterteil ansetzbar ist.

10. Anlage nach einem der Ansprüche 1 bis 9, **dadurch gekennzeichnet, dass** der Sammelbehälter (6) als Wiegebehälter ausgebildet ist.

## Claims

1. Apparatus for collecting flowable material components contained in several component containers (2) arranged in a row and having in each case a dosing device (3) in the region of the outlet from each component container (2) and a receptacle (6) movable along the lined up component containers and into which the particular component is transferred in accordance with its proportion in a mixing formula, **characterized in that** a vibrator (11) is movable together with the receptacle (6) and on approaching a selected component container (2) can be attached by means of an actuator (17) to the wall (14) of said container for loosening the material component contained therein, and that the actuator (17) is vibration-decoupled from the vibrator (11).

2. Apparatus according to claim 1, **characterized in that** the vibrator (11) can be attached in self-adhesive manner to the wall (14) of component container (2).

3. Apparatus according to claim 1 or 2, **characterized in that** the vibrator (11) has a pneumatically controlled suction cup (13) for attachment to the wall (14) of component container (2).

4. Apparatus according to one of the claims 1 to 3, **characterized in that** the vibrator (11) is a piston vibrator.

5. Apparatus according to one of the claims 1 to 4, **characterized in that** the actuator (17) is a pneumatic cylinder.

6. Apparatus according to claim 4, **characterized in that** the actuator (17) is fixed and the piston vibrator is arranged with a parallel axis and spaced therefrom and that between the same a damping guide (15, 20) connected to the actuator is provided and in which is guided with clearance a guide member (15) connected to the piston vibrator (11).

7. Apparatus according to one of the claims 1 to 6, **characterized in that** the receptacle (6) is located in a moving frame (5) and that the actuator (17) is connected to the moving frame (5, 23).

8. Apparatus according to claim 7, **characterized in that** a vibration-damping component (20) is positioned between the actuator (17) and moving frame (5).

9. Apparatus according to one of the claims 1 to 8, **characterized in that** in the case of component containers (2) with a base drawn inwards in funnel-like manner the piston vibrator (11) can be attached to the base.

10. Apparatus according to one of the claims 1 to 9, **characterized in that** the receptacle (6) is constructed as a weighing receptacle.

## Revendications

1. Installation pour collecter des composants de matières fluides, qui sont contenus dans des réservoirs (2) à composants disposés en ligne, présentant à chaque fois un dispositif de dosage (3) dans la zone de sortie de chacun des réservoirs (2) à composants et un réservoir collecteur (6) pouvant être déplacé le long des réservoirs à composants alignés, dans lequel on introduit le composant respectif selon sa proportion dans la formulation d'un mélange, **caractérisée en ce que** l'on peut déplacer avec le réservoir collecteur (6) un vibrateur (11) actionné par un servomoteur (17), vibrateur qui, lors de la venue en contact avec un réservoir (2) à composants sélectionné, peut être monté sur la paroi (14) de ce réservoir pour ameublir les composants de matière qui y sont contenus, et **en ce que** le servomoteur (17) est découplé en mouvements de basculement par rapport au vibrateur (11).

2. Installation selon la revendication 1, **caractérisée en ce que** le vibrateur (11) peut être monté par auto-adhérence sur la paroi (14) du réservoir à composants.

3. Installation selon la revendication 1 ou 2, **caractérisée en ce que** le vibrateur (11) présente une ventouse (13) à commande pneumatique pour sa fixation sur la paroi (14) du réservoir à composants (2).

4. Installation selon l'une quelconque des revendications 1 à 3, **caractérisée en ce que** le vibrateur (11) est un vibrateur à piston.

5. Installation selon l'une quelconque des revendications 1 à 4, **caractérisée en ce que** le servomoteur (17) est un vérin pneumatique.

6. Installation selon la revendication 4, **caractérisée en ce que** le servomoteur (17) est monté fixe et **en ce que** le vibrateur à piston (11) est monté à axe parallèle à distance de celui-ci, et qu'entre les deux est disposé un moyen de guidage (15,20) amortisseur relié au servomoteur, dans lequel un élément de guidage (15) relié au vibrateur à piston (11) est guidé avec jeu.

7. Installation selon l'une quelconque des revendications 1 à 6, **caractérisée en ce que** le réservoir de collecte (6) est positionné dans un cadre mobile (5) et **en ce que** le servomoteur (17) est relié au cadre mobile (5, 23).

8. Installation selon la revendication 7, **caractérisée en ce qu'**une pièce (20) destinée à amortir les vibrations est disposée entre le servomoteur (17) et le cadre mobile (5).

9. Installation selon l'une quelconque des revendications 1 à 8, **caractérisée en ce que** dans le cas de réservoirs (2) à composants à partie inférieure en forme de trémie rétrécie vers l'intérieur, le vibrateur à piston (11) peut être fixé sur la partie inférieure.

10. Installation selon l'une quelconque des revendications 1 à 9, **caractérisée en ce que** le réservoir collecteur (6) est conformé en réservoir de pesage.
